(19) Europäisches Patentamt
European Patent Office
Office européen des brevets

(11) **EP 3 778 718 B1**

(12) **EUROPEAN PATENT SPECIFICATION**

(45) Date of publication and mention of the grant of the patent:
**02.09.2026 Bulletin 2026/36**

(21) Application number: **19775073.0**

(22) Date of filing: **05.02.2019**

(51) International Patent Classification (IPC):
***C08L 9/00*** *(2006.01)* ***C08L 21/00*** *(2006.01)*
***C08J 3/12*** *(2006.01)* ***C08C 2/06*** *(2006.01)*
***C08F 6/12*** *(2006.01)* ***C08F 6/24*** *(2006.01)*
***C08F 6/00*** *(2006.01)* ***C08J 3/14*** *(2006.01)*

(52) Cooperative Patent Classification (CPC):
(C-Sets available)
**C08L 9/00; C08C 2/06; C08F 6/008; C08J 3/14; C08L 21/00;** C08J 2309/00; Y02W 30/62 (Cont.)

(86) International application number:
**PCT/JP2019/004035**

(87) International publication number:
**WO 2019/187650 (03.10.2019 Gazette 2019/40)**

(54) **CRUMBS, PRODUCTION METHOD FOR SAME, AND PRODUCTION METHOD FOR BALE**

KRUMEN, HERSTELLUNGSVERFAHREN DAFÜR UND HERSTELLUNGSVERFAHREN FÜR BALLEN

GRANULES, PROCÉDÉ DE FABRICATION ASSOCIÉ, ET PROCÉDÉ DE FABRICATION DE BALLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2018 JP 2018062949**

(43) Date of publication of application:
**17.02.2021 Bulletin 2021/07**

(73) Proprietor: **Zeon Corporation**
**Tokyo 100-8246 (JP)**

(72) Inventor: **NAKAMURA, Masao**
**Tokyo 100-8246 (JP)**

(74) Representative: **Kraus & Lederer PartGmbB**
**Thomas-Wimmer-Ring 15**
**80539 München (DE)**

(56) References cited:
**EP-A1- 1 153 939**
**EP-A1- 2 787 011**
**WO-A1-2004/007567**
**WO-A1-2007/034660**
**WO-A1-2013/146530**
**WO-A1-2017/103782**
**JP-A- 2001 226 427**
**JP-A- 2002 241 425**
**JP-A- 2003 040 919**
**JP-A- 2003 144 958**
**JP-A- H1 017 611**
**JP-A- H10 330 404**
**JP-A- S4 953 991**
**JP-A- S5 274 683**
**JP-A- S5 859 201**
**JP-A- S5 861 122**
**US-A- 3 751 402**
**US-A- 5 616 652**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 6/008, C08L 47/00**

## Description

### TECHNICAL FIELD

The present invention relates to a crumb containing rubber, a method of manufacturing a crumb, and a method of manufacturing a bale.

### BACKGROUND OF THE INVENTION

Conventionally, a steam stripping method has been known as a method of manufacturing crumbs (see, for example, Patent Document 1).

Specifically, after a rubber solution and a pressurized steam are supplied into hot water, a solvent contained in the rubber solution is removed. That is, when the solvent is removed from the rubber solution, a hot water slurry in which crumbs are dispersed can be formed. Next, when hot water is removed from the hot water slurry using a screen, crumbs can be formed. The crumbs are then dehydrated, dried and then molded into a bale.

Here, from the viewpoint of saving energy, it is desirable to reduce the amount of pressurized steam that is used, that is, to reduce a ratio of the amount of pressurized steam supplied to the amount of a rubber solution supplied.

### RELATED-ART DOCUMENT

#### Patent Documents

Patent document 1: Japanese Unexamined Patent Publication No. 2002-241425

JP 2001 226427 A provides a method for sufficiently and efficiently removing a volatile organic component in an elastomer by removing a volatile substance in the elastomer comprising (1) a process for subjecting a solution of the elastomer in an organic solvent to steam stripping by a stripper tank to obtain a crumby slurry of elastomer and (2) a process for treating the crumby slurry of elastomer in a slurry surge tank.

JP 2003 144958 A provides an apparatus and a method for crushing rubber particles in which the average diameter of rubber particles is uniformized and reduced, and the content of residual organic solvent in the rubber particles is reduced.

### SUMMARY OF THE INVENTION

#### Problems to be Solved by the Invention

However, with the conventional methods, the volatile content of crumbs increases when a ratio of a supply amount of a pressurized steam to a supply amount of a rubber solution is reduced. Due to this reason, the crumbs with increased volatile content adheres to a screen and leads to clogging of the screen. In addition, the crumbs with increased volatile content adhere to each other, and the volatile content of a bale increases.

One aspect of the present invention is to provide crumbs capable of suppressing the clogging of a screen and capable of reducing the volatile content of a bale, even when the ratio of a supply amount of pressurized steam to a supply amount of a rubber solution is reduced.

#### Means for Solving the Problems

A first embodiment of the invention relates to a method of manufacturing crumbs comprising:

supplying a rubber solution and a pressurized steam into hot water flowing in a predetermined direction and bringing the rubber solution and the pressurized steam into contact with each other,
wherein when A represents a supply amount per unit time [kg/h] of the pressurized steam and B represents a supply amount per unit time [t/h] of the rubber solution, a relation of A and B satisfies the following:

$A/B \leq 250$, and
the hot water contains 3 to 35 ppm of a dispersant.

A second embodiment relates to a method of manufacturing a bale comprising manufacturing the crumbs by applying the method of manufacturing the crumbs of the of the first embodiment of the inventive method.

A third embodiment relates to a crump produced according to the method the first embodiment, said crumb

comprising rubber:

wherein the volatile content of the crumb is 5 to 50% by mass, and a ratio of a surface area of the crumb to a volume of the crumb is 0.04 $mm^{-1}$ or more,
wherein the volatile content of the crumb is measured in accordance with the method A described in JIS H6238-2, Raw material rubber-Method of determining volatile content (quantitative amount) - Part 2 the automatic infrared dry thermogravimetric method, and
wherein the ratio of the surface area of the crumb to the volume of the crumb is measured by a three-dimensional image of the crumbs collected by the screen provided in front of the crumb tank is photographed by a three-dimensional X-ray CT apparatus TDM1000-IS under the following conditions:

Target: W
Tube voltage: 35kV
Tube current: 70 μA
Shooting condition: 360° rotation,
followed by calculating the surface area of voids (the inner surface area of the crumb), the outer surface area of the crumb, and the volume of the crumb from the three-dimensional images of the crumb obtained by binarizing into the structure and the space, and
the ratio of surface area to the volume of crumb is calculated by the following formula:

[(surface area of voids) + (outer surface area of crumb)]/ (volume of crumb).

EFFECT OF THE INVENTION

One aspect of the present invention provides crumbs capable of suppressing a generation of clogging of a screen and capable of reducing a volatile content of a bale, even when a ratio of a supply amount of a pressurized steam to a supply amount of a rubber solution is reduced.

BRIEF DESCRIPTION OF THE DRAWINGS

[FIG.1] FIG. 1 is a schematic diagram showing an example of a crumb according to the present embodiment.
[FIG.2] FIG. 2 is a schematic diagram showing an example of an apparatus for manufacturing a crumb used when manufacturing the crumb of FIG. 1.
[FIG.3A] FIG. 3A is a schematic side view showing an example of the nozzle of FIG. 2.
[FIG.3B] FIG. 3B is a schematic back view showing an example of the nozzle of FIG. 2.

DETAILED DESCRIPTION

Hereinafter, the embodiments for carrying out the present invention will be described.

<Crumb>

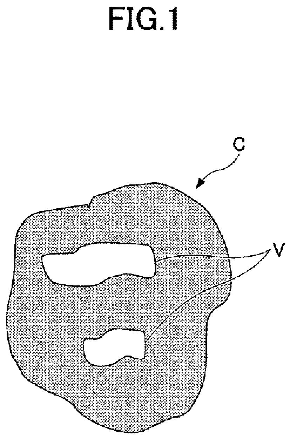

FIG. 1 shows an example of crumb according to the present embodiment.
The crumb C contains rubber and has voids V formed therein.
The volatile content of the crumb C is 5 to 50% by mass, and preferably 25 to 45% by mass. When the volatile content of the crumb C is less than 5% by mass, the crumb C deteriorates when the crumb C is dehydrated or when the dehydrated crumb C is dried. When the volatile content of the crumb C exceeds 50% by mass, clogging of a screen is generated, and the volatile content of a bale increases.
The ratio of the surface area to the volume of crumb C is 0.04 $mm^{-1}$ or more and preferably 0.05 $mm^{-1}$ or more. When the ratio of the surface area to the volume of crumb C is less than 0.04 $mm^{-1}$, the volatile content of a bale increases.
The upper limit of the ratio of the surface area to the volume of crumb C is not particularly limited, but is preferably 0.20 $mm^{-1}$ or less. When the ratio of the surface area to the volume of crumb C is 0.20 $mm^{-1}$ or less, the toughness of crumb C is improved and the shape of crumb C is easily maintained during the transportation of crumb C.
Here, the surface area of crumb C is the sum of the surface area of the voids V and the outer surface area of the crumb C.
The rubber is not particularly limited. Examples of rubber include acrylic rubber, isoprene rubber, styrene/bu-

tadiene rubber (SBR), low cis butadiene rubber, high cis butadiene rubber, high trans butadiene rubber, styrene/isoprene rubber, butadiene/isoprene rubber, styrene/isoprene/butadiene rubber, ethylene/propylene/diene rubber, styrene/acrylonitrile/butadiene rubber, acrylonitrile/butadiene rubber, polyisoprene/SBR block copolymer, polystyrene/polybutadiene/polystyrene triblock copolymer, epichlorohydrin rubber, fluororubber, silicone rubber, ethylene/propylene rubber, urethane rubber, and the like.

The rubber may have its terminal or molecular chain modified with at least one modifying group such as an amino group, a hydroxyl group, an alkoxysilyl group, a silanol group, and the like.

<Method of manufacturing crumb>

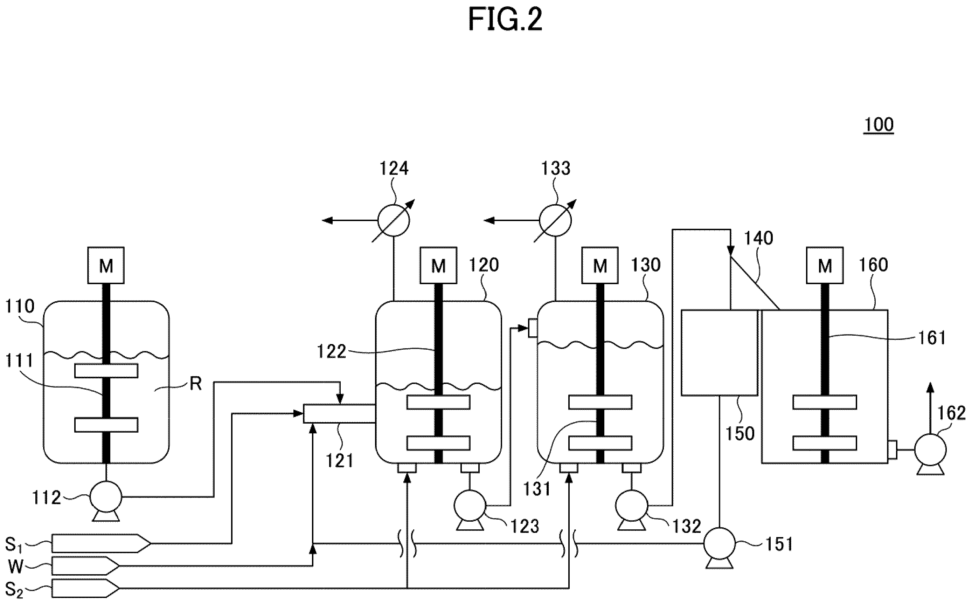

A method of manufacturing a crumb C using the apparatus for manufacturing crumb 100 (see FIG. 2) will be described.

First, a conventional solution polymerization method may be used to polymerize monomers serving as constituent units of rubber to prepare a rubber solution R.

Next, the rubber solution R is transferred to the rubber solution tank 110. Here, the viscosity may be adjusted by adding a solvent to the rubber solution R before the solution is transferred to the rubber solution tank 110. Further, the rubber solution R transferred to the rubber solution tank 110 is agitated by the stirrer 111 placed in the rubber solution tank 110, as needed.

Next, the rubber solution R, pressurized steam $S_1$, and hot water W are supplied to the nozzle 121 provided on the side of the desolvation tank 120. At this time, the rubber solution R is supplied from the bottom of the rubber solution tank 110 by the pump 112.

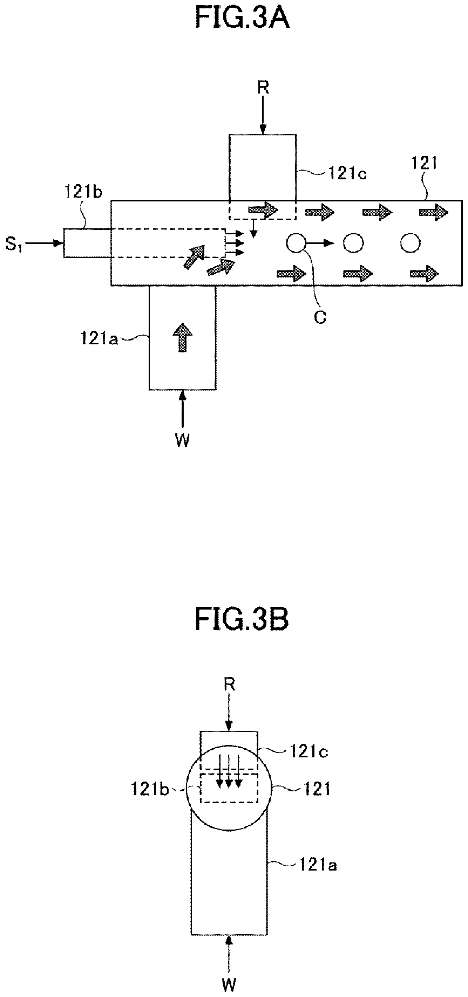

An example of the nozzle 121 is shown in Figs. 3A and 3B. Figs. 3A and 3B are a side view and a rear view, respectively.

The nozzle 121 has a hot water supply unit 121a on the bottom, has a pressurized steam supply unit 121b on the side, and has a rubber solution supply unit 121c on the top.

Hot water W is supplied from the hot water supply unit 121a to the inside of the nozzle 121 in the vertical direction (upward in the drawing) and then flows in the horizontal direction (rightward in the drawing).

In the present specification and claims, the horizontal direction is defined as a range of $\pm 10°$ from the horizontal direction.

Pressurized steam $S_1$ is supplied from the pressurized steam supply unit 121b to the hot water W flowing in the horizontal direction inside the nozzle 121 with respect to the flow direction of hot water W (rightward in the drawing). As a result, the moving speed of the generated crumbs C increases, and the crumbs C are less likely to collide with each other. As a result, agglomeration of the crumbs C can be suppressed.

The rubber solution R is supplied from the rubber solution supply unit 121c into the hot water W flowing in the horizontal direction inside the nozzle 121 with respect to the direction perpendicular to the flowing direction of the hot water W (downward in the figure). As a result, the rubber solution R and the pressurized steam $S_1$ are brought into contact with each other in the hot water W flowing in the horizontal direction to form a crumb C, and a slurry, in which the crumb C is dispersed, is generated.

In addition, the flow direction of the hot water W, the directions in which the pressurized steam $S_1$ and the rubber solution R are supplied are not particularly limited, as long as the rubber solution R and the pressurized steam $S_1$ are able to brought into contact each other in the hot water W flowing.

For example, the pressurized steam $S_1$ may be supplied in a direction of acute angle with respect to the direction of hot water W flowing.

Further, the rubber solution R may be supplied in a direction of acute angle with respect to the direction of hot water W flowing. Thereby, the moving speed of the generated crumbs C are further increased, and the crumbs C are less likely to collide with each other. As a result, agglomeration of the crumbs C can be further suppressed.

From the viewpoint of saving energy, when A represents a supply amount per unit time of the pressurized steam $S_1$ [kg/h] and B represents a supply amount per unit time of the rubber solution R [t/h], the relation of A and B satisfies the following:

$$A/B \leq 250,$$

and preferably satisfies the following:

$$A/B \leq 220.$$

The lower limit of the ratio A/B is not particularly limited, but is preferably 120 kg/t or more.

Here, A is the mass per unit time of the pressurized steam $S_1$ supplied into the hot water W flowing in the horizontal direction inside the nozzle 121. Further, B is the volume per unit time of the rubber solution R supplied into the hot water W flowing in the horizontal direction inside the nozzle 121.

B is not particularly limited, but is preferably 10 to 100 t/h.

The temperature of the pressurized steam $S_1$ is not particularly limited, but is preferably 190 to 230°C.

The pressure of the pressurized steam $S_1$ is not particularly limited, but is preferably 0.6 to 3 MPa.

The hot water W contains 3 to 35 ppm of dispersant, and preferably contains 10 to 30 ppm. When the content of the dispersant in the hot water W is less than 3 ppm, a particle size of crumb C becomes large. Due to this reason, the crumb C having an increased volatile content adheres to a screen, resulting in a generation of clogging of the screen. In addition, the crumb with increased volatile content adhere to each other, and the volatile content of the bale increases. On the other hand, when the content of the dispersant in the hot water W exceeds 35 ppm, the particle size of crumb C decreases. Therefore, when the ratio of the supply amount of the pressurized steam to the supply amount of the rubber solution is reduced, the crumb C having an increased volatile content adhere to a screen and clogging of a screen is generated. In addition, the crumb with increased volatile content adhere to each other, and the volatile content of the bale increases.

The temperature of the hot water W is not particularly limited, but is preferably 70 to 120°C.

Here, when the hot water W contains a dispersant having a cloud point, the temperature of the hot water W is preferably equal to or higher than the cloud point of the dispersant.

As a dispersant, a nonionic surfactant, an anionic surfactant, a cationic surfactant, an amphoteric surfactant or the like can be used.

Examples of the nonionic surfactant include block copolymers of two or more kinds of alkylene oxides such as oxyethyleneoxypropylene block copolymers; polyoxyalkylene ether compounds such as polyoxyethylene lauryl ether, polyoxyethylene cetyl ether, polyoxyethylene stearyl ether, polyoxyethylene oleyl ether, polyoxyethylene octylphenyl ether, and polyoxyethylene nonylphenyl ether is formed by polyadding alkylene oxide to higher alcohols having 5 to 50 carbon atoms such as lauryl alcohol, cetyl alcohol, stearyl alcohol, oleyl alcohol, and the like, to alkylphenols such as octylphenol, isooctylphenol, nonylphenol, and the like, and to alkylnaphthols such as butylnaphthol, octylnaphthol, and the like; polyoxyalkylene glycol fatty acid ester compounds such as polyoxyethylene glycol monolaurate, polyoxyethylene glycol monopalmitate, polyethylene glycol monostearate, polyethylene glycol distearate, polyethylene glycol monooleate, and the like formed by polyadding alkylene oxide to higher fatty acids having 5 to 50 carbon atoms such as lauric acid, palmitic acid, stearic acid, oleic acid, and the like; polyhydric alcohol fatty acid ester compounds such as glyceryl monostearate, glyceryl monooleate, sorbitan monolaurate, sorbitan monopalmitate, sorbitan monostearate, sorbitan distearate, sorbitan tristearate, sorbitan monooleate, sorbitan dioleate, mannitan monolaurate, mannitan monostearate, mannitan distearate, mannitan monooleate, hexitan monolaurate, hexitan monopalmitate, hexitan monostearate, hexitan distearate, hexitan tristearate, hexitan monooleate, hexitan dioleate, and the like, that are esters of a polyhydric alcohol having 3 or more hydroxyl groups in the molecules such as glycerin, pentaerythritol, sorbitan, mannitan, hexitan, and polycondensates thereof with higher fatty acids having 5 to 50 carbon atoms; polyoxyalkylene polyhydric alcohol fatty acid ester compounds such as polyoxyethylene sorbitan monolaurate, polyoxyethylene sorbitan monostearate, polyoxyethylene sorbitan distearate, polyoxyethylene sorbitan monooleate, polyoxyethylene mannitan monopalmitate, polyoxyethylene mannitan monostearate, polyoxyethylene mannitan monooleate, polyoxyethylene hexitan monolaurate, polyoxyethylene hexitan monostearate, and the like formed by polyadding alkylene oxide to the polyhydric alcohol fatty acid ester compounds; polyoxyalkylene alkylamine compounds such as polyoxyethylene stearylamine, polyoxyethylene oleylamine, and the like; and alkylalkanolamide compounds.

Among these, polyoxyalkylene compounds such as block copolymers of two or more kinds of alkylene oxides, polyoxyalkylene ether compounds, polyoxyalkylene glycol fatty acid ester compounds, polyoxyalkylene polyhydric alcohol fatty acid ester compounds, and polyoxyalkylene alkylamine compounds are preferably used; and oxyethyleneoxypropylene block copolymer, polyoxyethylene lauryl ether, polyoxyethylene stearyl ether, polyoxyethylene nonylphenyl ether, polyethylene glycol monostearate, polyoxyethylene sorbitan monostearate, and polyoxyethylene stearylamine are particularly preferably used.

Examples of the anionic surfactant include carboxylates such as aliphatic monocarboxylate, polyoxyethylene alkylether carboxylate, N-acyl sarcosine salt, N-acyl glutamate, and the like; sulfonates such as dialkyl sulfosuccinate, alkyl sulfonate, $\alpha$-olefin sulfonate, linear alkyl benzene sulfonate, branched alkyl benzene sulfonates, naphthalene sulfonate-formaldehyde condensate, alkyl naphthalene sulfonate, N-methyl-N-acyl taurate, and the like; sulfates such as alkyl sulfate, polyoxyalkyl ether sulfate, fat and oil sulfate, and the like; phosphates such as alkyl phosphate, polyoxyethylene alkyl ether phosphate, polyoxyethylene alkylphenylether phosphate, and the like.

Examples of the cationic surfactant include monoalkylamine salt, dialkylamine salt, trialkylamine salt, alkyltrimethylammonium chloride, alkyltrimethylammonium bromide, alkyltrimethylammonium iodide, dialkyldimethylammonium chloride salt, dialkyldimethylammnonium bromide salt, dialkyldimethylammonium iodide salt, alkylbenzalkonium chloride, and the like.

Examples of the amphoteric surfactant include alkyldimethylamino acetic acid betaine, alkyldimethyl acetic acid

betaine, alkyldimethyl carboxymethyl betaine, alkyldimethyl carboxymethylene ammonium betaine, alkyldimethyl ammonioacetate, fatty acid amidepropyl dimethylamino acid betaine, alkyloylamidepropyl dimethylglycine, alkyloylamidopropyldimethyl ammonioacetate, 2-alkyl-1-(2-hydroxyethyl) imidazolinium-1-acetate, alkyldiaminoethylglycine, dialkyldiaminoethylglycine, alkyldimethylamineoxide, and the like.

A dispersant may be used alone or in combination of two or more types.

The content of the rubber in the rubber solution R is not particularly limited, but is preferably 10 to 50% by mass.

Next, the slurry in which the crumb C is dispersed, which is generated in the nozzle 121, is transferred to the desolvation tank 120. At this time, the steam $S_2$ is supplied vertically (upward in the drawing) from the bottom of the desolvation tank 120, while stirring the slurry transferred to the desolvation tank 120 using the stirrer 122. Then, the slurry is desolvated by a steam stripping method. As a result, a part of the volatile organic compounds (solvents, unreacted monomers, etc.) contained in the slurry, in which the crumb C is dispersed, evaporates.

Here, the volatile organic compound that has evaporated by desolvation is condensed in the condenser 124, and then the solvent is recovered and reused as needed.

The temperature of steam $S_2$ is not particularly limited, but is preferably 100 to 190°C.

The pressure of steam $S_2$ is not particularly limited, but is preferably 0.1 to 1 MPa.

Next, the desolvated slurry is transferred from the bottom of the desolvation tank 120 to the bottom of the desolvation tank 130 by the pump 112. At this time, the steam $S_2$ is supplied vertically (upward in the figure) from the bottom of the desolvation tank 130, while stirring the slurry transferred to the desolvation tank 130 using the stirrer 131. The slurry is then desolvated by a steam stripping method. As a result, the rest of the volatile organic compounds contained in the slurry, in which the crumbs C are dispersed, evaporates, and a hot water slurry in which the crumb C is dispersed is generated.

Here, the volatile organic compound that has evaporated by desolvation is condensed in the condenser 133, and then the solvent is recovered and reused as needed.

Note that the number of desolvation tanks is not limited to two. The number of desolvation tanks can be appropriately changed to a number that can sufficiently remove the volatile organic compounds contained in the slurry in which the crumb C is dispersed.

Next, the hot water slurry is transferred from the bottom of the desolvation tank 130 to the screen 140 by the pump 132, and the hot water slurry is separated into serum water (hot water) and crumbs C. As a result, the serum water is collected in the serum water tank 150 and the crumbs C are collected in the crumb tank 160.

Here, the serum water collected in the serum water tank 150 is transferred from the bottom of the serum water tank 150 using the pump 151 as needed. Then, the serum water is mixed with the hot water W and reused.

The inclination angle of the screen 140 is not particularly limited, but is preferably 30 to 75°.

Further, the crumb C collected in the crumb tank 160 is stirred by a stirrer 161 as needed. Then, the crumb C is transferred from the side of the crumb tank 160 by the pump 162, and the crumb C is used for manufacturing a bale.

<Method of manufacturing bale>

A bale includes rubber and can be produced by a known method using the crumbs C produced by the method of manufacturing crumbs of the present embodiment.

For example, the crumbs C are dehydrated, dried, and then molded using a mold having a predetermined shape to produce a bale.

Here, the crumb C may be crushed and then dehydrated.

As a dehydrator for dehydrating the crumb C, for example, a screw press type dehydrator or the like can be used.

As a dryer for drying the dehydrated crumb C, for example, an expansion type extrusion dryer, a vibration dryer or the like can be used.

As a molding machine for molding the dried crumb C, a known molding machine can be used.

EXAMPLES

Examples of the present invention will be described below, but the present invention is not limited to the described examples. In addition, "part" and "%" are based on mass unless otherwise specified.

The crumbs and the bales produced by the method described below were evaluated by the following.

[Median diameter $D_{50}$]

The crumbs that were collected on the screen placed in front of the crumb tank were classified using sieves with mesh sizes of 16 mm, 8 mm, 4.75 mm, 3.35 mm, 2.36 mm, 1.7 mm, 1.4 mm, and 0.71 mm in according with JIS Z8801. The median diameter $D_{50}$ on mass bases of the crumbs were calculated.

[Ratio of surface area to volume]

A three-dimensional image of the crumbs collected by the screen provided in front of the crumb tank was photographed by a three-dimensional X-ray CT apparatus TDM1000-IS (manufactured by Yamato Scientific Co., Ltd.) under the following conditions.

Target: W
Tube voltage: 35kV
Tube current: 70 μA
Shooting condition: 360° rotation

Next, the surface area of voids (the inner surface area of the crumb), the outer surface area of the crumb, and the volume of the crumb was calculated from the three-dimensional images of the crumb obtained by binarizing into the structure and the space.

Finally, the ratio of surface area to the volume of crumb was calculated by the following formula:

[(surface area of voids) + (outer surface area of crumb)] / (volume of crumb).

[Amount of residual solvent]

The amount of residual solvent in the crumbs or bales was measured by headspace gas chromatography in accordance with ASTM D1416 Standard Test Methods for Rubber from Synthetic Sources-Chemical Analysis. Specifically, after a sample was put in a vial, the sample was kept at 160°C for 30 minutes to quantify the amount of the solvent in the volatile content to determine the amount of the residual solvent. An FID detector was used as the detector.

[Volatile content]

The volatile content of crumbs or bales was measured in accordance with the method A described in JIS H6238-2, Raw material rubber-Method of determining volatile content (quantitative amount) - Part 2 The automatic infrared dry thermogravimetric method.

[Clogging of screen]

The clogging of the screen, which was placed in front of the crumb tank, was visually evaluated.

[Preparation of butadiene rubber solution]

18.8t of a mixed solvent of cyclohexane and butane in a mass ratio of 70:30 and 2.5t of 1,3-butadiene were charged into a reaction vessel equipped with a jacket of approximately 47 $m^3$, a cooler, and a stirrer. Then, the mixture was stirred and mixed. Next, 30 mol of n-butyllithium was added while stirring the mixed solution in the reaction vessel, and then a polymerization was started at 50°C. Here, 1,3-butadiene used is the one obtained by removing 4-t-butylcatechol (TBC) as a polymerization inhibitor. After 40 minutes from the start of the polymerization, 2.5t of 1,3-butadiene was continuously added over 30 minutes when the temperature of the mixed solution reached 80°C. Next, when the polymerization conversion rate exceeded 99%, 3 mol of tin tetrachloride was added and stirred for 5 minutes, then 16 mol of N-phenyl-2-pyrrolidone was added and reacted for 5 minutes to obtain a polymerization solution.

The polymerization solution was transferred from the reaction vessel to the rubber solution tank 110 of the apparatus for manufacturing crumb 100 (see FIG. 2). Here, 30 mol of methanol was added to stop the polymerization while transferring the polymerization solution, and then 0.3 phr of Irganox 1520L (manufactured by BASF) as a stabilizer was added to obtain a butadiene rubber solution as a rubber solution R. The content of a butadiene rubber in the rubber solution R was 21% by mass.

After the rubber solution R was transferred to the rubber solution tank 110, the rubber solution R was stirred using the stirrer 111 and stored in a homogenized state.

Here, a small amount of the rubber solution R was sampled, solidified, and then vacuum dried to obtain a butadiene rubber. The 1,2-bonding amount of the butadiene rubber was 9% when measured by FT-IR (solution method). The Mooney viscosity ML1+4 (100°C) of the butadiene rubber was measured and the viscosity thereof was 50.

[Examples 1 to 4, Comparative Examples 1 to 3]

(Production of crumbs)

Crumbs were produced using the apparatus for manufacturing crumb 100 (see FIG. 2).

First, the pressurized steam $S_1$, the rubber solution R, and hot water W at 80°C were supplied to the nozzle 121 of the desolvation tank 120. Specifically, both of the rubber solution R and the pressurized steam $S_1$ at 1.09 MPa and 190°C were supplied in the vertical direction and the horizontal direction, respectively, into the hot water W flowing in the horizontal direction. Then, the rubber solution R and the pressurized steam $S_1$ were brought into contact to obtain a slurry in which crumb C was dispersed (see FIGS. 3A and 3B). Here, the supply amount A of a pressurized steam $S_1$ per unit time [kg/h], the supply amount B of a rubber solution R per unit time [t/h], and the supply amount of hot water W per unit time [t/h], the content of a dispersant in hot water W [ppm] were set to the values described in production conditions of crumbs (see Table 1). As the dispersant, a polyoxyethylene-polyoxypropylene condensate having a cloud point of 58°C was used.

Next, after transferring the slurry in which the crumb C was dispersed to the desolvation tank 120, the steam $S_2$ at 0.3 MPa and 180°C was supplied, and a part of the solvent was evaporated by a steam stripping method.

Next, after transferring the slurry in which a part of the solvent is evaporated to the desolvation tank 130, the steam $S_2$ at 0.3 MPa and 180°C was supplied. The remaining part of the solvent was evaporated by a steam stripping method to produce a hot water slurry in which the crumb C was dispersed.

Next, the hot water slurry in which the crumb C was dispersed was separated using a plain weave screen 140 with an opening of 0.5 mm provided at an inclination angle of 60°. As a result, the serum water was collected in the serum water tank 150, and the crumb C was collected in the crumb tank 160.

(Production of bales)

The crumb C collected in the crumb tank 160 was transferred to a plain weave vibrating screen with an opening of 0.5 mm provided at an inclination angle of 0°. Then, the crumb C was crushed and then dehydrated by a screw press type dehydrator.

Next, the dehydrated crumb C was extruded at 70 rpm and dried using an expansion type extruder having an inner diameter of 14 inches. Here, a die having 60 round-shaped nozzles having a diameter of 9 mm was provided at the outlet of the expansion type extrusion dryer, and the extruded crumb C was cut by a cutter rotating at 400 rpm.

Next, the shredded crumb C was dried by a vibration dryer. At this time, the residence time in the vibration dryer was adjusted to be about 5 minutes. The vibration dryer was divided into seven sections, and the temperatures of the seven sections were set to 80°C, 100°C, 100°C, 100°C, 90°C, 80°C, and 40°C in the order in which the shredded crumb C was conveyed.

Next, the dried crumb C was molded into a bale using a rectangular parallelepiped mold.

Table 1 shows the evaluation results of the properties of crumbs C, the production conditions of the crumbs C, and the properties of the bales.

[Table 1]

| | | Examples | | | | Comparative Examples | | |
|---|---|---|---|---|---|---|---|---|
| | | 1 | 2 | 3 | 4 | 1 | 2 | 3 |
| Production conditions of crumbs | Supply amount A of pressurized steam per unit time [kg/h] | 5.20 | 4.59 | 3.98 | 3.06 | 9.18 | 7.04 | 5.20 |
| | Supply amount B of rubber solution per unit time [t/h] | 21.4 | 21.4 | 21.4 | 21.4 | 21.4 | 21.4 | 21.4 |
| | A/B [kg/t] | 243 | 214 | 186 | 143 | 429 | 329 | 243 |
| | Supply amount of warm water per unit time [t/h] | 78.0 | 78.0 | 78.0 | 78.0 | 78.0 | 78.0 | 78.0 |
| | Content of dispersant in warm water [ppm] | 5 | 10 | 10 | 11 | 0 | 0 | 50 |

(continued)

| | | Examples | | | | Comparative Examples | | |
|---|---|---|---|---|---|---|---|---|
| | | 1 | 2 | 3 | 4 | 1 | 2 | 3 |
| Properties of crumbs | Median diameter $D_{50}$ [mm] | 3.9 | 4.3 | 4.8 | 5.6 | 2.1 | 3.3 | 1.5 |
| | Ratio of surface area to volume [$mm^{-1}$] | 0.054 | 0.062 | 0.065 | 0.059 | 0.012 | 0.039 | 0.036 |
| | Amount of residual solvent [ppm] | 3300 | 5100 | 5500 | 8200 | 1200 | 3100 | 8800 |
| | Volatile content [% by mass] | 49.8 | 47.1 | 46.2 | 45.3 | 55.6 | 51.0 | 60.5 |
| Evaluation of production of crumbs | Clogging of screen | Not observed | | | | observed | Small amount of clogging was observed on the screen | Clogging was observed on the entire screen |
| Properties of bales | Amount of residual solvent [ppm] | 50 | 20 | 10 | 70 | 1 | 80 | 330 |
| | Volatile content [% by mass] | 0.87 | 0.50 | 0.30 | 0.60 | 0.95 | 0.90 | 1.20 |

From Table 1, Examples 1 to 4 showed that clogging of the screen 140 was suppressed, and the volatile contents of the bales were decreased when the ratio A/B was lowered to 143 to 243 kg/t.

In contrast, Comparative Example 1 showed that the ratio A/B was 429 kg/t, in which the ratio was not lowered. The ratio of the surface area to the volume of the crumb was 0.012 $mm^{-1}$ and the volatile content was 55.6% by mass, because the dispersant was not added to the hot water W. As a result, the clogging of the screen 140 was generated, and the volatile content of the bale increased.

Comparative Example 2 showed that the ratio A/B was 329 kg/t, in which the ratio was not lowered. The ratio of the surface area to the volume of the crumb was 0.039 $mm^{-1}$ and the volatile content was 51.0% by mass, because the dispersant was not added to the hot water W. As a result, the clogging of the screen 140 was generated, and the volatile content of the bale increased.

Comparative Example 3 showed that the ratio A/B was lowered to 243, but the content of the dispersant in the hot water W was 50 ppm. Accordingly, the ratio of the surface area to the volume of crumb was 0.036 $mm^{-1}$, and the volatile content was 60.5% by mass. As a result, the clogging of the screen 140 was generated and the volatile content of the bale increased.

DESCRIPTION OF THE REFERENCE NUMERALS

100: Apparatus for manufacturing crumb
110: Rubber solution tank
111, 122, 131, 161: Stirrers
112, 123, 132, 151, 162: Pumps
120, 130: Desolvation tanks
121: Nozzle
121a: Hot water supply unit
121b: Pressurized steam supply unit
121c: Rubber solution supply unit

124, 133: Condensers
140: Screen
150: Serum water tank
160: Crumb tank
C: Crumb
V: Void
R: Rubber solution
$S_1$: Pressurized steam
$S_2$: Steam
W: Hot water

## Claims

**1.** A method of manufacturing crumbs comprising:

supplying a rubber solution and a pressurized steam into hot water flowing in a predetermined direction and bringing the rubber solution and the pressurized steam into contact with each other,
wherein when A represents a supply amount per unit time [kg/h] of the pressurized steam and B represents a supply amount per unit time [t/h] of the rubber solution, a relation of A and B satisfies the following:

$$A/B \leq 250,$$

and
the hot water contains 3 to 35 ppm of a dispersant, wherein said method further comprises
flowing the hot water in a horizontal direction;
supplying the rubber solution in the orthogonal direction or acute direction with respect to the flow direction of the hot water; and
supplying the pressurized steam into the flow direction of the hot water.

**2.** A method of manufacturing a bale comprising manufacturing the crumbs by applying the method of manufacturing the crumbs of claim 1.

**3.** A crumb produced according to the method of claim 1, said crumb comprising:

rubber;
wherein a volatile content of the crumb is 5 to 50% by mass, and a ratio of a surface area of the crumb to a volume of the crumb is 0.04 $mm^{-1}$ or more,
wherein the volatile content of the crumb is measured in accordance with the method A described in JIS H6238-2, Raw material rubber-Method of determining volatile content (quantitative amount) - Part 2 the automatic infrared dry thermogravimetric method, and
wherein the ratio of the surface area of the crumb to the volume of the crumb is measured by a three-dimensional image of the crumbs collected by the screen provided in front of the crumb tank is photographed by a three-dimensional X-ray CT apparatus TDM1000-IS under the following conditions:

Target: W
Tube voltage: 35kV
Tube current: 70 μA
Shooting condition: 360° rotation,
followed by calculating the surface area of voids (the inner surface area of the crumb), the outer surface area of the crumb, and the volume of the crumb from the three-dimensional images of the crumb obtained by binarizing into the structure and the space, and
the ratio of surface area to the volume of crumb is calculated by the following formula:

[(surface area of voids) + (outer surface area of crumb)] / (volume of crumb).

## Patentansprüche

1. Verfahren zur Herstellung von Krümeln, umfassend:

   Zuführen einer Kautschuklösung und eines Druckdampfes in heißes Wasser, das in einer vorbestimmten Richtung strömt, und In-Kontakt-Bringen der Kautschuklösung und des Druckdampfes miteinander,
   wobei, wenn A eine Zufuhrmenge pro Zeiteinheit [kg/h] des Druckdampfes darstellt und B eine Zufuhrmenge pro Zeiteinheit [t/h] der Kautschuklösung darstellt, eine Beziehung von A und B Folgendes erfüllt:

   $$A/B \leq 250,$$

   und
   das heiße Wasser 3 bis 35 ppm eines Dispergiermittels enthält,
   wobei das Verfahren ferner umfasst
   Strömenlassen des heißen Wassers in einer horizontalen Richtung;
   Zuführen der Kautschuklösung in der orthogonalen Richtung oder spitzwinkligen Richtung in Bezug auf die Strömungsrichtung des heißen Wassers; und
   Zuführen des Druckdampfes in die Strömungsrichtung des heißen Wassers.

2. Verfahren zur Herstellung eines Ballens, umfassend das Herstellen der Krümel durch Anwenden des Verfahrens zur Herstellung der Krümel nach Anspruch 1.

3. Krümel, hergestellt nach dem Verfahren nach Anspruch 1, wobei der Krümel Folgendes umfasst:

   Kautschuk;
   wobei ein flüchtiger Anteil des Krümels 5 bis 50 Massen-% beträgt und ein Verhältnis einer Oberfläche des Krümels zu einem Volumen des Krümels 0,04 $mm^{-1}$ oder mehr beträgt,
   wobei der flüchtige Anteil des Krümels gemäß dem in JIS H6238-2, Rohkautschuk - Verfahren zur Bestimmung des flüchtigen Anteils (quantitative Menge) - Teil 2: das automatische Infrarot-Trocken-Thermogravimetrieverfahren, beschriebenen Verfahren A gemessen wird, und
   wobei das Verhältnis der Oberfläche des Krümels zum Volumen des Krümels gemessen wird, indem ein dreidimensionales Bild der Krümel, die durch das vor dem Krümelbehälter vorgesehene Sieb gesammelt werden, mit einer dreidimensionalen Röntgen-CT-Vorrichtung TDM1000-IS unter den folgenden Bedingungen aufgenommen wird:

      Target: W
      Röhrenspannung: 35 kV
      Röhrenstrom: 70 $\mu$A
      Aufnahmebedingung: 360°-Drehung,
      gefolgt von der Berechnung der Oberfläche der Hohlräume (der inneren Oberfläche des Krümels), der äußeren Oberfläche des Krümels und des Volumens des Krümels aus den dreidimensionalen Bildern des Krümels, die durch Binarisierung in die Struktur und den Raum erhalten werden, und
      das Verhältnis der Oberfläche zum Volumen des Krümels nach der folgenden Formel berechnet wird:

      [(Oberfläche der Hohlräume) + (äußere Oberfläche des Krümels)]/(Volumen des Krümels).

## Revendications

1. Procédé de fabrication de miettes comprenant :

   fournir une solution de caoutchouc et une vapeur sous pression dans de l'eau chaude s'écoulant dans une direction prédéterminée et mettre la solution de caoutchouc et la vapeur sous pression en contact l'une avec l'autre,
   dans lequel, lorsque A représente une quantité d'alimentation par unité de temps [kg/h] de la vapeur sous pression et B représente une quantité d'alimentation par unité de temps [t/h] de la solution de caoutchouc, une relation entre A et B satisfait ce qui suit :

$$A/B \leq 250,$$

et
l'eau chaude contient 3 à 35 ppm d'un dispersant,
dans lequel ledit procédé comprend en outre
faire s'écouler l'eau chaude dans une direction horizontale ;
fournir la solution de caoutchouc dans la direction orthogonale ou la direction en angle aigu par rapport à la direction d'écoulement de l'eau chaude ; et
fournir la vapeur sous pression dans la direction d'écoulement de l'eau chaude.

**2.** Procédé de fabrication d'une balle comprenant la fabrication des miettes par application du procédé de fabrication des miettes selon la revendication 1.

**3.** Miette produite selon le procédé de la revendication 1, ladite miette comprenant :

du caoutchouc ;
dans laquelle une teneur en matières volatiles de la miette est de 5 à 50 % en masse, et un rapport d'une aire de la surface de la miette à un volume de la miette est de 0,04 $mm^{-1}$ ou plus,
dans laquelle la teneur en matières volatiles de la miette est mesurée conformément au procédé A décrit dans JIS H6238-2, Caoutchouc brut - Méthode de détermination de la teneur en matières volatiles (quantité) - Partie 2 : la méthode thermogravimétrique automatique par séchage infrarouge, et
dans laquelle le rapport de l'aire de la surface de la miette au volume de la miette est mesuré par une image tridimensionnelle des miettes collectées par le tamis prévu devant le réservoir de miettes, photographiée par un appareil de CT à rayons X tridimensionnel TDM1000-IS dans les conditions suivantes :

Cible : W
Tension du tube : 35 kV
Courant du tube : 70 µA
Condition de prise de vue : rotation à 360°,
suivi du calcul de l'aire de la surface des vides (l'aire de la surface interne de la miette), de l'aire de la surface externe de la miette et du volume de la miette à partir des images tridimensionnelles de la miette obtenues par binarisation en la structure et l'espace, et
le rapport de l'aire de la surface au volume de la miette est calculé par la formule suivante :

[(aire de la surface des vides) + (aire de la surface externe de la miette)] / (volume de la miette).

FIG.1

C
V

FIG.2

100
M
M
M
M
110
111
R
112
120
121
122
123
124
130
131
132
133
140
150
151
160
161
162
$S_1$
W
$S_2$

# FIG.3A

R
121c
121
121b
$S_1$
C
121a
W

# FIG.3B

R
121c
121b
121
121a
W

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002241425 A
- JP 2001226427 A
- JP 2003144958 A